# FASCICULE DE BREVET EUROPEEN

(11) **EP 3 390 880 B1**
(45) Date de publication et mention de la délivrance du brevet: **22.09.2021**
(21) Numéro de dépôt: 16809961.2
(22) Date de dépôt: 03.11.2016
(51) Int. Cl.: F16L 19/025, G06K 19/07

(54) **DISPOSITIF DE RACCORDEMENT COMPRENANT UN TRANSPONDEUR RFID**
VERBINDUNGSVORRICHTUNG MIT EINEM RFID-ETIKETT
CONNECTING DEVICE COMPRISING AN RFID TAG

(30) Priorité: 14.12.2015 FR 1562305
(43) Date de publication de la demande: 24.10.2018
(73) Titulaire: Carpentier, Philippe, 64800 Benejacq (FR)
(72) Inventeur: CARPENTIER, Philippe, 64800 Benejacq (FR)
(74) Mandataire: Plasseraud IP
(86) Numéro de dépôt international: PCT/FR2016/052856
(87) Numéro de publication internationale: WO 2017/103356

(56) Documents cités:
- WO-A1-2009/083943
- DE-U1-202012 100 577
- GB-A- 2 518 674
- US-A1- 2002 170 731

## Description

### Domaine de l'invention

La présente invention concerne un dispositif de raccordement avec un élément de fixation tel qu'un dispositif d'écrou comprenant, sur sa face d'appui destinée à venir en contact avec la structure ou la face d'une pièce avec laquelle il est assemblé, un marqueur électronique comportant un identifiant unique de cet écrou, tel qu'un transpondeur RFID.

Elle concerne encore une installation comprenant au moins un circuit de transport d'un fluide sous pression équipé de tels éléments de fixation ainsi qu'un procédé de gestion de conduite dans un tel circuit de transport de fluide.

La présente invention trouve des applications dans l'ensemble des industries agro- alimentaires, vinicoles, pharmaceutiques, chimiques et, plus généralement, les secteurs utilisant des raccordements par système SMS, DIN, MÂCON, CLAMP ou encore raccord demi-symétrique guillemin, appelé plus communément "raccord à mâchoires".

### Arrière-plan technologique

On connaît des éléments de fixation de l'état de l'art tels que des écrous, et des raccords comportant de tels écrous pour l'assemblage de conduites en vue de former des circuits de transport de liquide.

Typiquement, les écrous SMS sont essentiellement utilisés dans les métiers du lait et des plats préparés.

Les écrou DIN sont préférentiellement utilisés dans l'industrie pharmaceutique et se généralisent progressivement sur des cuves utilisées en laiteries et dans les chais de nouvelle génération. Les écrous MACON sont quant à eux essentiellement utilisés dans l'industrie du vin.

Le document WO 2009/083943 A1 décrit un dispositif pour lequel un raccord comprend un marqueur optique de positionnement. En complément un marqueur RFID permet de donner une information sur le type de raccord.

Le document US 2002/0170731 A1 décrit pour sa part un connecteur comportant une première fiche pourvue d'un premier transmetteur RF et une ficche complémentaire pourvue d'un second transmetteur RF qui vont contrôler le passage d'un fluide une fois qu'un couplage correct des fiches est réalisé.

Les transmetteurs comportent des coupleurs annulaires en regard.

### Problèmes techniques et solutions de l'invention

Plusieurs problématiques sont rencontrées avec ces éléments de fixation de l'état de l'art :
- Mauvaise traçabilité des flux de produit lors de leur transfert par des liaisons souples démontables.

A titre purement illustratif, une cave transfère des centaines de litres de vin entre ses diverses cuves. Pour réaliser ces transferts, un technicien de chai branche un flexible souple, souvent long de plusieurs mètres, le connecte à une pompe mobile, puis à un appareil de filtration, et stocke le produit dans une nouvelle cuve. Il est fréquent que plusieurs vins subissent ce type de transfert en même temps. Se pose alors la question de garantir une traçabilité de ces transferts et de le prouver au client final. Actuellement, le moyen utilisé chez le client passe par une action manuelle de saisie.

Le risque d'une erreur manuelle existe et aucune garantie ne peut être apportée.

Le dispositif d'écrou du dispositif de l'invention, lorsqu'il est relayé avec l'automatisme adapté, répond à cette problématique, puisqu'il permet de lire automatiquement le nom ou numéro d'identification unique associé à un élément de fixation du flexible correspondant, ce numéro ayant été préalablement stocké dans la puce ou le transpondeur de cet élément de fixation lors de la réalisation du flexible. Le flexible est ainsi identifié par le numéro d'identification de son élément de fixation. Le fait de donner une information à un automate selon laquelle une première cuve est connectée à un raccord A d'un flexible X, l'autre extrémité de ce flexible X étant connecté par un raccord B à une seconde cuve permet de fournir l'information certaine selon laquelle le produit initialement stocké dans la première cuve a été transféré dans la seconde cuve.
- Mauvaise traçabilité des flexibles et des documents qualité, fiches qualité, ou certificats alimentaires.

On connaît des flexibles composés chacun d'un tuyau et de raccords placés aux extrémités de ce tuyau, la référence du tuyau étant inscrite sur l'extérieur de ce tuyau. On constate cependant qu'à l'usage, ce marquage a tendance à disparaître. De plus, il est très difficile de connaître l'année de conception d'un tuyau ou encore le lot de matière première utilisée pour le fabriquer.

Le dispositif d'écrou du dispositif de l'invention permet de dématérialiser ces informations et de les loger, lors de la fabrication d'un flexible, dans une puce électronique ou transpondeur solidaire de ce flexible par le biais de l'élément de fixation. L'implantation spécifique de ladite puce ou transpondeur dans l'élément de fixation de ce flexible permet en outre de garantir l'absence de pollution de l'espace interne de travail du flexible par une puce qui se serait détachée.
- Risque de présence d'allergène dans un produit alimentaire. On connaît deux principales sources :

### a) pollution par un flexible non lavé.

Par exemple, une pâtisserie industrielle réalise des brioches fourrées au chocolat et d'autres, fourrées à la framboise. Si un opérateur oublie de laver le flexible entre le transfert des différents produits, il existe un risque de faire transiter du chocolat dans un flexible pollué par des traces de framboise, et donc d'introduire un risque de présence d'allergène dans les brioches au chocolat.

Le dispositif d'écrou du dispositif de l'invention, lorsqu'il est relayé avec l'automatisme adapté permet d'incrémenter sur la puce ou le transpondeur RFID porté par ledit élément de fixation, l'information flexible lavé, non lavé, produit dernièrement transféré chocolat ou framboise. Il suffit alors de lire de manière automatique cette ou ces informations avant le départ du cycle de transfert et de conditionner le départ du cycle en fonction du critère produit véhiculé et/ou flexible lavé.

### b) pollution par un flexible mal dédié.

A titre illustratif, et toujours avec notre exemple précédent, il est possible que le choix soit fait d'affecter des flexibles pour le transfert du chocolat et d'autres pour le transfert de la framboise. Il existe cependant un risque d'erreur humaine, à savoir que l'opérateur utilise le mauvais flexible lors du transfert.

Le dispositif d'écrou du dispositif de l'invention, lorsqu'il est relayé avec l'automatisme adapté permet de lire l'information flexible dédié à la framboise ou au chocolat dans ce cas, la lecture automatique du transpondeur avant le départ du cycle conditionne le transfert à la bonne affectation produit flexible.
- Risque de brûlures graves lors des phases de lavage avec des produits corrosifs chauds par exemple, de la soude à 80°C. Deux sources principales de risque sont connues :

### a) flexible non connecté lors du transfert des produits de lavage.

Par exemple, les phases de lavages qu'utilisent nombre d'industries alimentaires sont automatiques et le nettoyage de la machine est réalisé dans son intégralité. Les systèmes sont grands et les circuits longs. Le risque qu'un flexible soit déconnecté lors du lancement du lavage existe. On déplore ainsi un grand nombre de cas de personnes douchées à la soude.

Le dispositif d'écrou du dispositif de l'invention, lorsqu'il est relayé avec l'automatisme adapté permet en automatique de conditionner le départ du cycle à la détection d'un flexible. Cette information correspond à la détection de la puce ou du transpondeur présent sur l'élément de fixation de ce flexible.

### b) écrou de flexible mal serré.

Par exemple, il est connu que détecter la non présence d'un flexible avec une cellule classique permet d'éviter des accidents graves, par contre il est possible que le flexible soit effectivement connecté mais mal vissé.

Le dispositif d'écrou du dispositif de l'invention, lorsqu'il est relayé avec l'automatisme adapté permet en automatique de conditionner le départ du cycle de lavage en fonction de la détection écrou en position serrée puisque la position angulaire de l'écrou est alors détecté et pas seulement la présence de ce dernier.
- Risque d'introduction de substances nocives

Par exemple, des substances nocives peuvent être introduites dans des installations de production alimentaire. Les contrôles qualités et analyses réalisées ont vocation à détecter des germes et non des produits chimiques. Ces substances nocives peuvent passer outre les analyses qualités. Pour s'en prémunir les industriels utilisent des cadenas sur les fermetures de trappes ainsi que des caméras.

Cependant, les raccords qui ont vocation à être démontés régulièrement ne se prêtent pas à ce type de solution et beaucoup de liaisons restent des points à haut risque.

Le dispositif d'écrou du dispositif selon la présente invention lorsqu'il est relayé avec l'automatisme adapté répond à cette problématique et permet de détecter toute déconnection dudit élément de fixation. Le dispositif d'écrou peut être couplé à un système d'identification par carte magnétique par exemple, pour donner l'information concernant l'une quelconque des déconnections ayant pu se produire, offrant la possibilité d'inspecter et analyser la canalisation avant toute production.

### Brève description de l'invention

La présente invention est définie par les revendications indépendantes et vise à pallier les inconvénients de l'art antérieur ci-dessus mentionnés en proposant un élément de fixation tel qu'un écrou, simple dans sa conception et dans son mode opératoire, économique et autorisant non seulement sa détection mais permettant également de s'assurer que ce dernier est en position serrée sur la face d'une pièce ou sur une structure.

Un élément de la présente invention est un embout de raccordement comportant un tel élément de fixation et destiné à être relié à une conduite pour assurer d'une part, une identification unique et déportée à l'extérieur de cette conduite et d'autre part, l'écriture et la lecture de données relatives à cette conduite.

Un objet également de la présente invention est un procédé de gestion de conduite dans un circuit de transport de fluide, simple et précis, permettant d'obtenir des informations sur le statut de chaque conduite de ce circuit et de prévoir le changement d'une conduite arrivée en fin de vie.

Encore un objet de la présente invention est un tel procédé garantissant qu'une conduite devant transporter un premier fluide, n'a pas préalablement transporté un autre fluide par exemple susceptible de contenir des allergènes, dont la présence dans le premier fluide serait indésirable.

Plus précisément, l'invention concerne un élément de fixation comprenant une face d'appui destinée à venir en contact contre une structure ou une face d'une pièce.

Selon l'invention, cet élément de fixation comprend un marqueur électronique stockant au moins un identifiant unique de cet élément de fixation, ce marqueur étant agencé sur ladite face d'appui, ou un détecteur actif configuré pour émettre un signal lorsque ledit élément de fixation est en position serrée avec ladite structure ou ladite pièce, cette dernière comportant alors un marqueur électronique permettant de définir ladite position serrée.

Ce marqueur électronique est un transpondeur d'identification par radiofréquence tel qu'un transpondeur RFID ou tag RFID. Avantageusement, il est alors possible de lire des données stockées dans une unité de stockage de ce transpondeur au moyen d'un lecteur portable.

Selon un mode de réalisation, le transpondeur RFID est un transpondeur RFID basse fréquence (LF).

A titre d'exemple, le transpondeur RFID basse fréquence (LF) est un transpondeur RFID possédant une fréquence comprise entre 125 kHz et 134,2 kHz, préférentiellement d'environ 125kHz.

Dans un autre mode de réalisation, le transpondeur RFID est un transpondeur RFID haute fréquence (HF).

A titre purement illustratif, le transpondeur RFID haute fréquence, est un transpondeur RFID possédant une fréquence supérieure ou égale à 13.56 MHz.

Le transpondeur selon l'invention permet ainsi avantageusement de travailler dans un environnement en inox très défavorable au transfert des ondes. A titre purement illustratif, cet élément de fixation peut être un écrou, une vis ou un goujon.

L'écrou peut à titre d'exemple être choisi dans le groupe comprenant écrou carré, à six pans; écrou à entailles, à oreilles, écrou brasé, taraudé, fileté, ...

L'écrou, ou dispositif d'écrou est aux normes de filetage, par exemple, écrou à filet rond (SMS - « Swedish Metric Standard » ou DIN - « Deutsches Institut Normung ») ou écrou à filet conique (MÂCON), ou encore à filet trapézoïdal Acme (ISS), ...

Cet écrou est de préférence métallique, par exemple réalisé en acier ou acier inoxydable ou encore en zinc. De manière avantageuse, il n'est pas nécessaire de mettre en oeuvre un outil spécifique pour le serrage de cet élément de fixation.

L'aspect esthétique n'est pas non plus modifié lorsque l'élément de fixation se trouve dans sa position serrée.

De manière encore plus avantageuse, le dispositif d'écrou permet de réaliser des connections sur tous les systèmes d'écrous sans modification des raccords en place.

Dans différents modes de réalisation particuliers de cet élément de fixation, chacun ayant ses avantages particuliers et susceptibles de nombreuses combinaisons techniques possibles:
- ledit marqueur est placé dans un logement situé sur ladite face d'appui, en étant affleurant ou sensiblement de niveau avec ladite face d'appui.

Le logement permet avantageusement de disposer ledit marqueur en étant affleurant ou sensiblement de niveau avec ladite surface d'appui, ce positionnement permettant d'éviter toute gêne au serrage et tout décalage. De plus, le logement permet de protéger ledit marqueur des nombreuses contraintes mécaniques et/ou chimiques subies dans un environnement industriel.

Avantageusement, le positionnement dudit marqueur dans un logement permet d'éviter tout risque de pollution pouvant être induite par le détachement du marqueur. Il est en effet connu de l'état de la technique que des étiquettes RFID placées sur le pourtour extérieur d'un dispositif de fixation se décollent et polluent l'environnement, par exemple lors des procédés de lavage et de désinfection de l'environnement de travail.

Le logement permet également de positionner le marqueur et d'assurer la répétabilité du positionnement.
- ledit marqueur comprend un moyen d'assemblage permettant de solidariser le marqueur dans son logement.

Selon un mode de réalisation, la surface externe du corps du marqueur présente un filetage destiné à coopérer avec un filetage correspondant placé sur la paroi interne du logement.

Dans un autre mode de réalisation, au moins une partie du marqueur est reliée au logement par une résine durcie assurant l'étanchéité. Typiquement, la résine peut être une résine époxy.

Ce mode de réalisation permet d'assurer l'étanchéité et permet également d'éviter une contamination bactérienne.

Dans encore un autre mode de réalisation, au moins une partie du marqueur est reliée au logement par un jonc de blocage.

Selon un autre mode de réalisation, le marqueur est relié au logement par de la colle.
- le corps dudit élément de fixation étant percé et comportant un taraudage sur au moins une partie du perçage dont le point de départ du filetage est placé du côté de ladite face d'appui, ledit marqueur est placé sur ladite face d'appui au niveau de ce point de départ du filetage ou en une position prédéfinie par rapport audit point de départ.

Avantageusement, cette position prédéfinie est repérée dans un repère lié à ladite face d'appui. A titre illustratif, l'origine de ce repère passe par l'axe central de l'élément.

Par exemple, ce transpondeur est positionné sur un cercle de rayon R, lequel a son origine sur l'axe de l'écrou. Il est ainsi possible de calculer l'angle Ω formé par ce transpondeur par rapport à un point de référence placé sur ce cercle.

De préférence, la position dudit marqueur électronique sur ladite face d'appui est identique pour une même série dudit élément de fixation, ladite position étant distincte pour des séries différentes dudit élément de fixation.
- la dimension séparant ladite face d'appui de la surface de contact avec la douille femelle support d'écrou, est constante pour chaque élément de fixation d'une même série,

La présente invention comprend aussi un embout de raccordement d'un élément de circuit de transport d'un fluide pour raccorder de manière étanche deux éléments de circuit entre eux tels que des conduites ou une conduite à une partie émettrice ou réceptrice de ce liquide, cet embout comportant un élément d'accueil d'une extrémité dudit élément de circuit et un écrou.

Selon l'invention, cet écrou est un élément de fixation tel que décrit précédemment.

A titre illustratif, ce fluide peut être un liquide sous pression. Par exemple, il peut s'agir d'un liquide sous une pression de plusieurs bars.

De préférence, cet écrou comportant un marqueur électronique, ce dernier comporte une unité de stockage de données comportant des moyens pour augmenter uniquement, ou diminuer uniquement, d'une unité un compteur de suivi de l'utilisation de l'élément de circuit qui est équipé dudit embout, en réponse à un signal de commande.

De manière avantageuse, cette unité de stockage peut recevoir d'autres informations telles que le dernier fluide transporté par la conduite équipée de cet embout de raccordement, le lavage ou non de cette conduite et selon quel procédé, ...

La présente invention concerne également une partie émettrice ou réceptrice d'un fluide dans un circuit de transport d'un fluide, ladite partie étant destinée à être mise en oeuvre avec ledit embout de raccordement tel que décrit précédemment, cet écrou comportant un marqueur électronique agencé sur ladite face d'appui.

Selon l'invention, cette partie comporte un détecteur actif configuré pour émettre un signal de commande lorsque l'écrou dudit embout de raccordement est en position serrée sur ladite partie émettrice ou réceptrice.

Ce détecteur actif émet typiquement des requêtes à intervalles de temps réguliers et reçoit une réponse de ce marqueur électronique lorsque ce dernier est placé à une distance de ce détecteur inférieure à une valeur prédéterminée, par exemple lorsqu'ils sont en position de serrage.

De préférence, ce détecteur actif est configuré de manière à détecter ledit marqueur électronique uniquement lorsque ce dernier est placé dans une position angulaire prédéterminée par rapport audit détecteur actif, dans sa position serrée.

Par exemple, seules les parties émettrice et réceptrice équipées de tête de lecture en position SMS 25 HI 1 peuvent détecter des flexibles pourvus de raccords SMS 25 HI 1. Bien entendu, un raccord SMS 25 HI 2 pourra être monté sur une telle partie émettrice ou réceptrice mais dans ce cas, la tête de lecture configurée pour détecter un raccord SMS 25 HI 1 ne le détectera pas.

A titre purement illustratif, ce détecteur actif est un dispositif de lecture et écriture ou une antenne de radio-identification.

La présente invention concerne également un ensemble de détection comprenant un élément de fixation tel que décrit précédemment, ledit élément de fixation comportant un marqueur (11) placé dans un logement situé sur ladite face d'appui, et un détecteur actif destiné à être relié à ladite structure ou pièce, ledit détecteur actif étant configuré pour émettre un signal lorsque ledit élément de fixation est en position serrée avec ladite structure ou ladite pièce.

La présente invention concerne autant une installation comprenant au moins un circuit de transport d'un fluide sous pression.

Selon l'invention, ledit ou au moins un desdits circuits de transport comportant au moins une partie telle que décrite précédemment et au moins une conduite, chaque conduite dudit circuit comportant à au moins une de ses extrémités, un embout de raccordement tel que décrit précédemment, ladite installation comporte une unité pour assurer le déplacement du fluide dans ledit circuit de transport et un dispositif de commande de cette unité, ledit dispositif de commande étant relié au moins au détecteur actif de ladite au moins une partie pour recevoir chaque signal émis dans ledit circuit de sorte que ladite unité met en déplacement ledit fluide dans ledit circuit correspondant uniquement lorsque chaque signal de commande a été reçu.

De manière avantageuse, ce dispositif de déplacement du fluide est une unité de pompage.

Le dispositif de commande peut être une unité de centrale de contrôle, par exemple distante, comportant un écran d'affichage pour permettre à l'utilisateur de vérifier le statut de chaque circuit de transport d'un fluide dans une installation et permettre de commander le fonctionnement du dispositif de déplacement du fluide correspondant d'un circuit donné.

Alternativement, il peut s'agir d'un dispositif de commande d'alimentation en énergie de cette unité. Dans ce dernier cas, le dispositif de déplacement du fluide dans le circuit n'est alimenté en énergie que lorsque ledit dispositif de commande a reçu le ou tous les signaux de commande émis dans ce circuit.

Dans différents modes de réalisation particuliers de cette installation, chacun ayant ses avantages particuliers et susceptibles de nombreuses combinaisons techniques possibles:
- deux conduites consécutives étant directement reliées entre elles, la liaison est réalisée par un premier embout de raccordement d'une desdites conduites, ledit premier embout comprenant un écrou comportant un marqueur électronique, et un second embout de l'autre conduite, ledit second embout comportant un détecteur actif émettant un signal lorsque lesdits embouts sont en position serrée,
- cette installation comportant plusieurs zones, par exemple de transfert ou de traitement, les éléments de fixation d'une desdites zones sont distincts de ceux d'une autre desdites zones afin d'empêcher qu'un élément de fixation d'une première zone soit utilisé dans une autre desdites zones.

Ainsi, les embouts de raccordement utilisés dans une première zone sont distincts de ceux mis en oeuvre dans les autres zones de cette installation afin d'éviter toute erreur de manipulation.
- le circuit de transport d'un fluide sous pression relie un premier contenant tel qu'une cuve, à au moins un second contenant pour assurer le transfert d'un liquide entre ce premier contenant et ce ou ces seconds contenants.

Selon la revendication indépendante 15, la présente invention concerne encore un procédé de gestion de conduite dans un circuit de transport d'un fluide, dans lequel chaque conduite comporte au moins un embout de raccordement tel que décrit précédemment, l'écrou de chacun de ces embouts de raccordement comprenant un marqueur électronique comportant une unité de stockage de données, chaque unité de stockage de données comportant des moyens pour augmenter uniquement, ou diminuer uniquement, d'une unité un compteur de suivi de l'utilisation de la conduite correspondante en réponse à un signal de commande.

Selon l'invention, on réalise les étapes suivantes:
- interroger chaque compteur pour obtenir des informations sur le statut de chaque conduite dudit circuit,
- à chaque utilisation dudit circuit, mettre à jour les données du compteur de chaque conduite en augmentant, ou respectivement diminuant, ce dernier en réponse à l'utilisation de la conduite correspondante,
- vérifier le statut de chaque conduite pour déterminer si au moins une conduite de ce circuit a atteint un seuil d'utilisation maximal nécessitant un remplacement, et
- remplacer chaque conduite ayant atteint ledit seuil maximal par une nouvelle conduite, ladite nouvelle conduite comportant au moins un embout de raccordement tel que décrit précédemment, chaque écrou comprenant un marqueur électronique comportant une unité de stockage de données, chaque unité de stockage de données comportant des moyens pour augmenter uniquement, ou diminuer uniquement, d'une unité un compteur de suivi de l'utilisation de ladite conduite en réponse à un signal de commande.

De préférence, cette unité de stockage comportant également au moins une information relative au dernier fluide transporté par ladite conduite correspondante, on réalise les étapes suivantes:
- préalablement à l'utilisation dudit circuit pour le transport d'un fluide, interroger chaque unité de stockage pour obtenir des informations sur la nature du dernier fluide transporté par chaque conduite,
- comparer ces informations avec le fluide à transporter dans ledit circuit de transport pour vérifier la compatibilité de chaque conduite avec ce fluide à transporter,
- émettre un signal d'alarme lorsqu'au moins une desdites conduites est non compatible avec le fluide à transporter dans ledit circuit, et
- changer la ou les conduites non compatibles dans ledit circuit par une nouvelle conduite, ladite nouvelle conduite comportant au moins un embout de raccordement tel que décrit précédemment, chaque écrou comprenant un marqueur électronique comportant une unité de stockage de données, chaque unité de stockage de données comportant des moyens pour augmenter uniquement, ou diminuer uniquement, d'une unité un compteur de suivi de l'utilisation de ladite conduite en réponse à un signal de commande.

De manière avantageuse, avant mise en service dudit circuit de transport d'un fluide, on vérifie qu'un signal est reçu pour chaque raccordement de deux conduites de ce circuit de transport, entre elles et chaque raccordement conduite/Partie émettrice ou réceptrice telle que décrite précédemment dudit circuit, lesdits signaux garantissant que l'ensemble des éléments dudit circuit sont en position serrée.

On évite ainsi qu'un assemblage mal réalisé entre deux conduites constitue une source de risque potentiel pour le ou les opérateurs placés à proximité.

Dans le procédé de gestion chaque conduite comporte au moins un embout de raccordement tel que décrit précédemment, l'écrou de chacun de ces embouts de raccordement comprenant un marqueur électronique comportant une unité de stockage de données, cette unité de stockage comportant au moins une information relative au dernier fluide transporté par ladite conduite correspondante.

Selon l'invention, on réalise les étapes suivantes:
- préalablement à l'utilisation dudit circuit pour le transport d'un fluide, interroger chaque unité de stockage pour obtenir des informations sur la nature du dernier fluide transporté par chaque conduite,
- comparer ces informations avec le fluide à transporter dans ledit circuit de transport pour vérifier la compatibilité de chaque conduite avec ce fluide à transporter,
- émettre un signal d'alarme lorsqu'au moins une desdites conduites est non compatible avec le fluide à transporter dans ledit circuit, et
- changer la ou les conduites non compatibles dans ledit circuit par une nouvelle conduite, ladite nouvelle conduite comportant au moins un embout de raccordement tel que décrit précédemment, chaque écrou comprenant un marqueur électronique comportant une unité de stockage de données, chaque unité de stockage de données comportant des moyens pour augmenter uniquement, ou diminuer uniquement, d'une unité un compteur de suivi de l'utilisation de ladite conduite en réponse à un signal de commande.

### Brève description des dessins

- la Figure 1 représente schématiquement une vue en perspective d'un dispositif d'écrou selon un premier mode de réalisation de la présente invention;
- la Figure 2 est une vue en coupe du dispositif d'écrou de la Fig. 1 ;
- la Figure 3 est une vue en perspective montrant un flexible comportant un dispositif d'écrou de la Fig. 1 et un raccord mâle équipé d'une tête de lecture adaptée;

### Description détaillée de modes de réalisation de l'invention

Tout d'abord, on note que les figures ne sont pas à l'échelle.

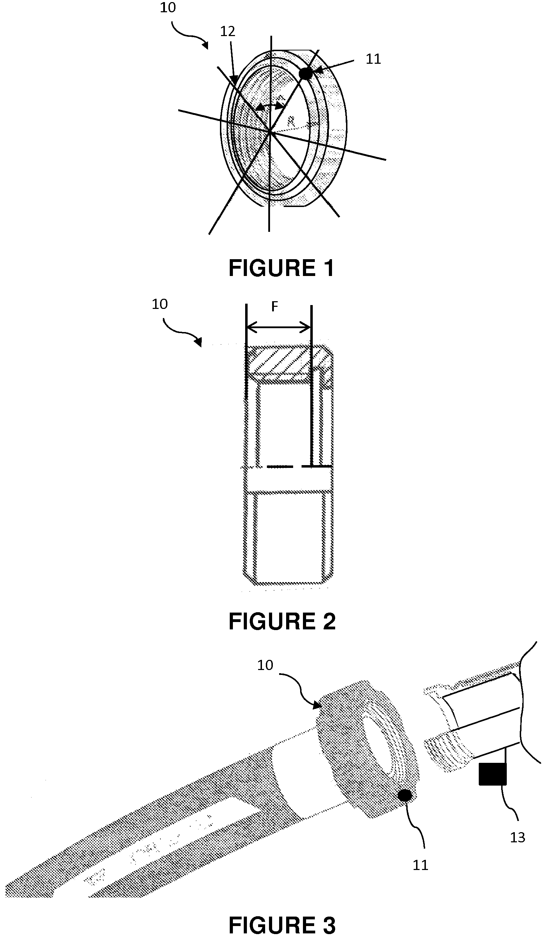

Les Figures 1 et 2 représentent schématiquement un module pour le transport d'un fluide, notamment de l'eau de mer, selon un mode de réalisation particulier de la présente invention.

L'objet décrit est une série d'écrous 10 adaptés et équipés selon le descriptif ci-après :
Le système consiste à l'implantation d'un transpondeur 11 RFID sur la face avant d'un écrou 10 SMS, DIN ou MÂCON adapté pour permettre cette implantation. Comme représenté sur la Figure 1, la position du transpondeur 11 est définie par le rayon "R" et l'angle "Ω".

Le transpondeur 11 est positionné sur un cercle dont le rayon R passe par l'axe de l'écrou 10.

La valeur de R est conditionnée par le diamètre nominal du raccord, le type de raccord SMS, DIN ou MÂCON ou encore CLAMP et de la série. (Voir plus loin alinéa spécifique de notion de série).

La position du centre du transpondeur 11 sur le cercle est définie par l'angle Ω.

L'angle Ω est celui que réalisent la droite AB (qui passe par l'axe de l'écrou 10 et par le point 12 de départ du filet sur la face avant de l'écrou 10) et la droite BC (qui passe par l'axe de l'écrou 10 et le point central du transpondeur 11).

La valeur de l'angle Ω est conditionnée par le diamètre nominal du raccord, le type de raccord SMS, DIN ou MÂCON et de la série. (Voir plus loin alinéa spécifique de notion de série).

Tous les écrous 10 du même modèle et d'une même série sont équipés de transpondeurs 11 identiquement positionnés selon l'angle Ω et rayons R, et sont donc parfaitement identiques.

La cote F entre la face de l'écrou et la surface de contact avec la douille femelle support d'écrou est identique sur tous les raccords de l'invention de même série.

Il en découle qu'une installation pour laquelle nous aurions équipé les raccords mâles, de têtes 13 de lecture RFID adaptées, est assurée après étalonnage lors de la première mise en service, d'obtenir une parfaite répétabilité de position des transpondeurs 11 RFID qui équipent les écrous 10.

Et donc, de mettre en connexion l'écrou 10 et la tête 13 de lecture, ce qui nous permet de garantir les fonctions annoncées dans le paragraphe problèmes techniques et solutions de l'invention.

L'invention permet de réaliser des transpondeurs 11 rattachés à des écrous 10, ou faisant partie d'un écrou 10, de telle sorte qu'ils communiquent avec des têtes 13 de lectures positionnées pour qu'elles communiquent avec l'écrou 10. Ceci quel que soit le modèle, le diamètre nominal de l'écrou 10 et la série d'écrous.

Notion de série: pour remplir pleinement sa fonction, il est indispensable de pouvoir proposer plusieurs séries de raccords, l'objectif est de permettre aux utilisateurs de zoner leurs installations. Dans certains cas, il est indispensable qu'un flexible de la zone 1 ne puisse être utilisé sur la zone 2 de son usine.

Pour pouvoir réaliser cette notion les angles Ω et/ou les rayons R des raccords ne seront pas les mêmes entre les différentes séries proposées.

## Revendications

1. Dispositif de raccordement étanche pour deux éléments de circuit de transport d'un fluide, pourvu d'un embout et d'une pièce complémentaire, ledit embout comportant un élément d'accueil d'une extrémité d'un premier élément de circuit et un écrou (10), ledit écrou (10) étant un élément de fixation de l'embout sur la pièce complémentaire reliée à un second élément de circuit, ledit écrou comportant une face d'appui destinée à venir en contact contre une structure de la pièce complémentaire ou une face de la pièce complémentaire, **caractérisé en ce que** ledit écrou est équipé d'un marqueur (11) sous forme d'un transpondeur RFID stockant au moins un identifiant unique de l'embout, ce marqueur étant placé dans un logement situé sur ladite face d'appui, le dispositif comportant en outre un détecteur (13) actif solidaire de ladite structure ou face de la pièce et configuré pour détecter ledit marqueur et émettre un signal lorsque l'écrou est en position serrée avec ladite pièce complémentaire.

2. Dispositif de raccordement selon la revendication 1, pour lequel ledit marqueur est placé dans ledit logement situé sur ladite face d'appui, en étant affleurant ou sensiblement de niveau avec ladite face d'appui.

3. Dispositif de raccordement selon la revendication 1 ou 2, pour lequel ledit marqueur est un transpondeur RFID basse fréquence.

4. Dispositif de raccordement selon la revendication 1 ou 2, pour lequel ledit marqueur est un transpondeur RFID haute fréquence.

5. Dispositif de raccordement selon l'une quelconque des revendications précédentes pour lequel une surface externe du corps dudit marqueur présente un filetage destiné à coopérer avec un filetage correspondant placé sur une paroi interne du logement ou pour lequel au moins une partie dudit marqueur est relié au logement par une résine durcie assurant une étanchéité entre le marqueur et le logement.

6. Dispositif de raccordement selon l'une quelconque des revendications précédentes, pour lequel l'écrou comporte un taraudage dont le point de départ (12) du filet est placé du côté de ladite face d'appui, ledit marqueur étant placé sur ladite face d'appui au niveau de ce point de départ (12) ou en une position angulaire prédéfinie par rapport audit point de départ.

7. Dispositif de raccordement selon la revendication 6, pour lequel la position dudit marqueur (11) sur ladite face d'appui est identique pour une même série dudit élément de fixation, ladite position étant distincte pour des séries différentes dudit élément de fixation.

8. Dispositif de raccordement selon l'une quelconque des revendications précédentes, pour lequel la dimension séparant ladite face d'appui de la surface de contact avec une douille femelle support d'écrou (10), est constante pour chaque élément de fixation d'une même série.

9. Dispositif de raccordement selon l'une quelconque des revendications précédentes, pour lequel le marqueur comporte une unité de stockage de données comportant des moyens pour augmenter uniquement d'une unité, ou diminuer uniquement d'une unité un compteur de suivi de l'utilisation de l'élément de circuit qui est équipé dudit embout, en réponse à un signal de commande émis par le détecteur actif.

10. Dispositif de raccordement selon l'une quelconque des revendications précédentes pour lequel ladite structure est une terminaison de raccordement d'une partie émettrice ou réceptrice d'un fluide dans un circuit de transport d'un fluide.

11. Dispositif de raccordement selon la revendication 10, pour lequel ledit détecteur (13) actif est configuré de manière à détecter ledit marqueur (11) uniquement lorsque l'écrou est dans une position serrée sur ladite terminaison telle que le marqueur est placé dans une position prédéterminée par rapport audit détecteur (13) actif.

12. Installation comprenant au moins un dispositif de raccordement selon l'une quelconque des revendications précédentes et au moins un circuit de transport d'un fluide sous pression, **caractérisée par** ledit ou au moins un circuit de transport comportant plusieurs conduites, chaque conduite dudit circuit comportant à au moins une de ses extrémités, un embout de raccordement du dispositif de raccordement, ladite installation comportant une unité pour assurer le déplacement du fluide dans ledit circuit de transport et un dispositif de commande de cette unité, ledit dispositif de commande étant relié au moins au détecteur (13) actif de ladite au moins une partie pour recevoir le signal émis par le marqueur de l'embout de raccordement d'une conduite reliée au circuit de sorte que ladite unité met en déplacement ledit fluide dans ledit circuit uniquement lorsque chaque signal a été reçu.

13. Installation selon la revendication 12, **caractérisée en ce que** au moins certaines des conduites comportent un premier embout équipé d'un marqueur et un second embout équipé d'un détecteur actif de sorte que deux conduites consécutives étant directement reliées entre elles par le dispositif de raccordement, la liaison est réalisée par un premier embout de raccordement d'une desdites conduites, ledit premier embout comprenant l'écrou (10) comportant le marqueur (11) électronique, et un second embout de l'autre conduite, ledit second embout comportant le détecteur (13) actif émettant un signal lorsque lesdits embouts sont en position serrée.

14. Installation selon la revendication 12 ou 13, **caractérisée en ce que**, ladite installation comportant plusieurs zones, les embouts de raccordement d'une desdites zones sont distincts de ceux d'une autre desdites zones afin d'empêcher qu'un embout de raccordement d'une première zone soit utilisé dans une autre desdites zones.

15. Procédé de gestion de conduites dans un circuit de transport d'un fluide par utilisation du dispositif de raccordement selon l'une quelconque des revendication 1 à 11, dans lequel chaque conduite comporte au moins un embout du dispositif de raccordement l'écrou (10) de chacun de ces embouts de raccordement comprenant un marqueur (11) électronique comportant une unité de stockage de données, chaque unité de stockage de données comportant des moyens pour augmenter uniquement ou diminuer uniquement d'une unité un compteur de suivi de l'utilisation de la conduite correspondante en réponse à un signal de commande émis par un détecteur actif correspondant **caractérisé en ce qu'**on réalise les étapes suivantes:
- interroger chaque compteur pour obtenir des informations sur le statut de chaque conduite dudit circuit,
- à chaque utilisation dudit circuit, mettre à jour les données du compteur de chaque conduite en augmentant, ou respectivement diminuant, ce dernier en réponse à l'utilisation de la conduite correspondante,
- vérifier le statut de chaque conduite pour déterminer si au moins une conduite de ce circuit a atteint un seuil d'utilisation maximal nécessitant un remplacement, et
- remplacer chaque conduite ayant atteint ledit seuil maximal par une nouvelle conduite, ladite nouvelle conduite comportant au moins un dit embout de raccordement.

16. Procédé de gestion selon la revendication 15, pour lequel ladite unité de stockage comportant également au moins une information relative au dernier fluide transporté par les conduites, on réalise les étapes suivantes:
- préalablement à l'utilisation dudit circuit pour le transport d'un fluide, interroger chaque unité de stockage pour obtenir des informations sur la nature du dernier fluide transporté par chaque conduite,
- comparer ces informations avec le fluide à transporter dans ledit circuit de transport pour vérifier la compatibilité de chaque conduite avec ce fluide à transporter,
- émettre un signal d'alarme lorsqu'au moins une desdites conduites est non compatible avec le fluide à transporter dans ledit circuit, et
- changer la ou les conduites non compatibles dans ledit circuit par une nouvelle conduite, ladite nouvelle conduite comportant au moins un dit embout de raccordement.

17. Procédé de gestion selon la revendication 15 ou 16, pour lequel, avant mise en service dudit circuit de transport d'un fluide, on vérifie qu'un signal est reçu pour chaque raccordement de deux conduites entre elles dudit circuit de transport et chaque raccordement conduite/Partie émettrice ou réceptrice dudit circuit, lesdits signaux garantissant que l'ensemble des éléments dudit circuit sont en position serrée.

## Patentansprüche

1. Verbindungseinrichtung für eine dichte Verbindung für zwei Elemente einer Transport-Leitungsanordnung für ein Fluid, ausgestattet mit einem Endstück und einem Komplementärstück, wobei das Endstück ein Aufnahme-Element für ein Ende eines ersten Elements der Leitungsanordnung sowie eine Mutter (10) umfasst, wobei die Mutter (10) ein Befestigungselement des Endstücks an dem Komplementärstück ist, welches mit einem zweiten Element der Leitungsanordnung verbunden ist, wobei die Mutter eine Auflagefläche aufweist, die dazu bestimmt ist, mit einer Struktur des Komplementärstücks oder einer Fläche des Komplementärstücks in Kontakt zu kommen,
**dadurch gekennzeichnet, dass** die Mutter mit einer Markierung (11) in Form eines RFID-Transponders versehen ist, die mindestens eine eindeutige Kennung des Endstücks speichert, wobei die Markierung in einem Gehäuse positioniert ist, das sich auf der Auflagefläche befindet, wobei die Einrichtung weiter einen aktiven Detektor (13) umfasst, der mit der Struktur oder Fläche des Stücks fest verbunden und dazu konfiguriert ist, die Markierung zu erkennen und ein Signal auszugeben, wenn sich die Mutter in einer angezogenen Position mit dem Komplementärstück befindet.

2. Verbindungseinrichtung nach Anspruch 1, wobei die Markierung in dem Gehäuse platziert ist, das sich auf der Auflagefläche befindet, wobei sie mit der Auflagefläche bündig oder im Wesentlichen auf gleicher Höhe ist.

3. Verbindungseinrichtung nach Anspruch 1 oder 2, wobei die Markierung ein Niederfrequenz-RFID-Transponder ist.

4. Verbindungseinrichtung nach Anspruch 1 oder 2, wobei die Markierung ein Hochfrequenz-RFID-Transponder ist.

5. Verbindungseinrichtung nach einem der vorhergehenden Ansprüche, wobei eine Außenfläche des Körpers der Markierung ein Gewinde aufweist, das dazu bestimmt ist, mit einem entsprechenden Gewinde zusammenzuwirken, das sich an einer Innenwand des Gehäuses befindet, oder wobei wenigstens ein Teil der Markierung mit dem Gehäuse durch ein gehärtetes Harz/Kunstharz verbunden ist, das eine Abdichtung zwischen der Markierung und dem Gehäuse gewährleistet.

6. Verbindungseinrichtung nach einem der vorhergehenden Ansprüche, wobei die Mutter eine Gewindebohrung aufweist, bei welcher der Anfangspunkt (12) des Gewindes auf der Seite der Auflagefläche angeordnet ist, wobei die Markierung auf der Auflagefläche in Höhe des Anfangspunkts (12) oder in einer vordefinierten Winkelposition in Bezug auf den Anfangspunkt platziert ist.

7. Verbindungseinrichtung nach Anspruch 6, wobei die Position der Markierung (11) auf der Auflagefläche für eine gleiche Serie des Befestigungselements identisch ist, wobei die Position für verschiedene Serien des Befestigungselements unterschiedlich ist.

8. Verbindungseinrichtung nach einem der vorhergehenden Ansprüche, wobei die Abmessung, welche die Auflagefläche von der Kontaktfläche mit einer Steckerbuchse zum Abstützen der Mutter (10) trennt, für jedes Befestigungselement einer gleichen Serie konstant ist.

9. Verbindungseinrichtung nach einem der vorhergehenden Ansprüche, wobei die Markierung eine Datenspeichereinheit umfasst, die Mittel umfasst, um in Reaktion auf ein Steuersignal, das von dem aktiven Detektor ausgegeben wird, einen Zähler zum Überwachen der Verwendung des Elements der Leitungsanordnung, das mit dem Endstück ausgestattet ist, nur um eine Einheit zu erhöhen oder nur um eine Einheit zu verringern.

10. Verbindungseinrichtung nach einem der vorhergehenden Ansprüche, wobei die Struktur ein Verbindungsabschluss eines Fluid ausgebenden oder aufnehmenden Teils in einer Transport-Leitungsanordnung für ein Fluid ist.

11. Verbindungseinrichtung nach Anspruch 10, wobei der aktive Detektor (13) so konfiguriert ist, dass er die Markierung (11) nur erkennt, wenn sich die Mutter in einer angezogenen Position an dem Abschluss befindet, so dass die Markierung in einer vorbestimmten Position bezüglich des aktiven Detektors (13) platziert ist.

12. Anlage, umfassend mindestens eine Verbindungseinrichtung nach einem der vorhergehenden Ansprüche und mindestens eine Transport-Leitungsanordnung für ein unter Druck stehendes Fluid,
**dadurch gekennzeichnet, dass** die oder mindestens eine Transport-Leitungsanordnung mehrere Leitungen umfasst, wobei jede Leitung der Leitungsanordnung an mindestens einem ihrer Enden ein Verbindungsendstück der Verbindungseinrichtung umfasst, wobei die Anlage eine Einheit zum Sicherstellen der Bewegung des Fluids in der Transport-Leitungsanordnung und eine Steuervorrichtung für diese Einheit umfasst, wobei die Steuervorrichtung mindestens mit dem aktiven Detektor (13) des mindestens einen Teils verbunden ist, um das Signal zu empfangen, das von der Markierung des Verbindungsendstücks einer Leitung gesendet wird, die mit der Leitungsanordnung so verbunden ist, dass die Einheit das Fluid in der Leitungsanordnung nur dann in Bewegung setzt, wenn jedes Signal empfangen wurde.

13. Anlage nach Anspruch 12, **dadurch gekennzeichnet, dass** zumindest einige der Leitungen ein erstes Endstück, das mit einer Markierung ausgestattet ist, und ein zweites Endstück umfassen, das mit einem aktiven Detektor ausgestattet ist, so dass zwei aufeinanderfolgende Leitungen direkt miteinander durch die Verbindungseinrichtung verbunden sind, wobei die Verbindung durch ein erstes Verbindungsendstück einer der Leitungen hergestellt wird, wobei das erste Endstück die Mutter (10) mit der elektronischen Markierung (11) umfasst, und ein zweites Endstück der anderen Leitung, wobei das zweite Endstück den aktiven Detektor (13) umfasst, der ein Signal aussendet, wenn die Endstücke sich in einer angezogenen Position befinden.

14. Anlage nach Anspruch 12 oder 13, **dadurch gekennzeichnet, dass** die Anlage mehrere Zonen umfasst, wobei die Verbindungsendstücke einer der Zonen von denen einer anderen der Zonen verschieden sind, um zu verhindern, dass ein Verbindungsendstück einer ersten Zone in einer anderen der Zonen verwendet wird.

15. Handhabungsverfahren für Leitungen in einer Transport-Leitungsanordnung für ein Fluid durch Verwendung einer Verbindungseinrichtung nach einem der Ansprüche 1 bis 11, wobei jede Leitung mindestens ein Endstück der Verbindungseinrichtung umfasst, wobei die Mutter (10) jedes dieser Verbindungsendstücke eine elektronische Markierung (11) mit einer Datenspeichereinheit umfasst, wobei jede Datenspeichereinheit Mittel umfasst, um als Reaktion auf ein von einem entsprechenden aktiven Detektor gesendetes Steuersignal einen Zähler zum Überwachen der Nutzung der entsprechenden Leitung um nur eine Einheit zu erhöhen oder um nur eine Einheit zu verringern, **dadurch gekennzeichnet, dass** die folgenden Schritte ausgeführt werden:
- Abfragen jedes Zählers, um Informationen über den Status jeder Leitung der Leitungsanordnung zu erhalten,
- bei jeder Verwendung der Leitungsanordnung, Aktualisieren der Daten des Zählers jeder Leitung durch Erhöhen bzw. Verringern des letzteren als Reaktion auf die Verwendung der entsprechenden Leitung,
- Überprüfen des Status jede Leitung, um festzustellen, ob mindestens eine Leitung der Leitungsanordnung einen maximalen Schwellenwert für die Nutzung erreicht hat, was ein Austauschen erfordert, und
- Ersetzen jeder Leitung, die den maximalen Schwellenwert erreicht hat, durch eine neue Leitung, wobei die neue Leitung mindestens ein genanntes Verbindungsendstück umfasst.

16. Handhabungsverfahren nach Anspruch 15, wobei die Speichereinheit ferner mindestens eine Information über das letzte von den Leitungen transportierte Fluid umfasst, und wobei die folgenden Schritte ausgeführt werden:
- vor der Verwendung der Transport-Leitungsanordnung für ein Fluid, Abfragen jeder Speichereinheit, um Informationen über die Art des letzten von jeder Leitung transportierten Fluids zu erhalten,
- Vergleichen dieser Informationen mit dem zu transportierenden Fluid in der Transport-Leitungsanordnung, um die Kompatibilität jeder Leitung mit dem zu transportierenden Fluid zu überprüfen,
- Ausgeben eines Alarmsignals, wenn mindestens eine der Leitungen mit dem in der Leitungsanordnung zu transportierenden Fluid nicht kompatibel ist, und
- Austauschen der inkompatiblen Leitung/Leitungen in der Leitungsanordnung durch eine neue Leitung, wobei die neue Leitung mindestens ein genanntes Verbindungsendstück umfasst.

17. Handhabungsverfahren nach Anspruch 15 oder 16, wobei vor Inbetriebnahme der Transport-Leitungsanordnung für ein Fluid verifiziert wird, dass für jede Verbindung von zwei Leitungen der Transport-Leitungsanordnung miteinander und für jede Verbindung einer Leitung / einem ausgebendem oder aufnehmendem Teil der Leitungsanordnung ein Signal empfangen wird, wobei die Signale sicherstellen, dass sich die Gesamtheit der Elemente der Leitungsanordnung in der angezogenen Position befinden.

## Claims

1. Coupling device for fluidtight coupling of two elements of a fluid transporting circuit, provided with an end-fitting and with a complementary fitting, said end-fitting comprising an element accepting one end of a first circuit element and a nut (10), said nut (10) being a fastener for securing the end-fitting to the complementary fitting connected to a second circuit element, said nut comprising a bearing face intended to come into contact with a structure of the complementary fitting or a face of the complementary fitting, **characterized in that** said nut is equipped with a marker (11) in the form of an RFID transponder storing at least one unique identifier of the end-fitting, this marker being placed in a housing situated on said bearing face, the device further comprising an active detector (13) indissociably secured to said structure or face of the fitting and configured to detect said marker and to emit a signal when the nut is in a position tightened onto said complementary fitting.

2. Coupling device according to Claim 1, for which said marker is placed in said housing situated on said bearing face, flush or substantially level with said bearing face.

3. Coupling device according to Claim 1 or 2, for which said marker is a low-frequency RFID transponder.

4. Coupling device according to Claim 1 or 2, for which said marker is a high-frequency RFID transponder.

5. Coupling device according to any one of the preceding claims, for which an external surface of the body of said marker has a screw thread intended to engage with a corresponding screw thread placed on an internal wall of the housing or for which at least part of said marker is connected to the housing by a cured resin providing sealing between the marker and the housing.

6. Coupling device according to any one of the preceding claims, for which the nut comprises a tapped thread for which the start (12) of the thread is placed at said bearing-face end, said marker being placed on said bearing face at this starting point (12) or in a predefined angular position with respect to said starting point.

7. Coupling device according to Claim 6, for which the position of said marker (11) on said bearing face is identical for the one same series of said fastener, said position being a distinct position for different series of said fastener.

8. Coupling device according to any one of the preceding claims, for which the dimension separating said bearing face from the surface of contact with a female bushing supporting a nut (10) is constant for each fastener of the one same series.

9. Coupling device according to any one of the preceding claims, for which the marker comprises a data storage unit comprising means for incrementing, by just one unit, or decrementing, by just one unit, a counter used for monitoring the use of the circuit element which is equipped with said end-fitting, in response to a command signal emitted by the active detector.

10. Coupling device according to any one of the preceding claims, for which said structure is a coupling termination of a fluid-emitting or fluid-receiving part of a fluid transport circuit.

11. Coupling device according to Claim 10, for which said active detector (13) is configured to detect said marker (11) only when the nut is in a position tightened onto said termination such that the marker is placed in a predetermined position with respect to said active detector (13).

12. Installation comprising at least one coupling device according to any one of the preceding claims and at least one circuit for transporting a fluid under pressure, **characterized by** said or at least one transport circuit comprising several pipes, each pipe of said circuit comprising, at least at one of its ends, a coupling end-fitting of the coupling device, said installation comprising a unit for causing the fluid to move through said transport circuit and a device for controlling this unit, said control device being connected at least to the active detector (13) of said at least one part to receive the signal emitted by the marker of the coupling end-fitting of a pipe connected to the circuit so that said unit causes said fluid to move through said circuit only when each signal has been received.

13. Installation according to Claim 12, **characterized in that** at least some of the pipes comprise a first end-fitting equipped with a marker and a second end-fitting equipped with an active detector so that, with two consecutive pipes connected directly to one another by the coupling device, the connection is performed by a first coupling end-fitting of one of said pipes, said first end-fitting comprising the nut (10) comprising the electronic marker (11), and a second end-fitting of the other pipe, said second end-fitting comprising the active detector (13) emitting a signal when said end-fittings are in the tightened-together position.

14. Installation according to Claim 12 or 13, **characterized in that**, with said installation comprising several zones, the coupling end-fittings of one of said zones are distinct from those of another of said zones so as to prevent a coupling end-fitting of a first zone from being used in another of said zones.

15. Method for the management of pipes in a fluid transporting circuit through use of the coupling device according to any one of Claims 1 to 11, wherein each pipe comprises at least one end-fitting of the coupling device, the nut (10) of each of these coupling end-fittings comprising an electronic marker (11) comprising a data storage unit, each data storage unit comprising means for incrementing by just or decrementing by just one unit a counter used for monitoring the use of the corresponding pipe in response to a command signal emitted by a corresponding active detector, **characterized in that** the following steps are performed:
- each counter is interrogated to obtain information regarding the status of each pipe of said circuit,
- on each use of said circuit, the data of the counter of each pipe are updated by incrementing, or respectively decrementing, said counter in response to the use of the corresponding pipe,
- the status of each pipe is verified in order to determine whether at least one pipe of this circuit has reached a maximum-use threshold requiring it to be replaced, and
- each pipe that has reached said maximum threshold is replaced with a new pipe, said new pipe comprising at least one said coupling end-fitting.

16. Management method according to Claim 15, for which, with said storage unit also comprising at least one item of information relating to the last fluid transported by the pipes, the following steps are performed:
- prior to the use of said circuit to transport a fluid, each storage unit is interrogated to obtain information regarding the nature of the last fluid transported by each pipe,
- this information is compared against the fluid that is to be transported in said transport circuit in order to verify compatibility of each pipe with this fluid that is to be transported,
- an alarm signal is emitted when at least one of said pipes is not compatible with the fluid that is to be transported in said circuit, and
- the incompatible pipe or pipes in said circuit is/are exchanged for a new pipe, said new pipe comprising at least one said coupling end-fitting.

17. Management method according to Claim 15 or 16, for which, before said fluid transport circuit is brought into service, it is verified that a signal is being received for each coupling-together of two pipes of said transport circuit and each coupling between a pipe and an emitting or receiving part of said circuit, said signals guaranteeing that all of the elements of said circuit are in the tightened-together position.
